# EUROPÄISCHE PATENTSCHRIFT

(11) **EP 2 930 411 B1**
(45) Veröffentlichungstag und Bekanntmachung des Hinweises auf die Patenterteilung: **31.05.2017**
(21) Anmeldenummer: 14164245.4
(22) Anmeldetag: 10.04.2014
(51) Int. Cl.: F16L 21/035, F16L 25/00

(54) **Rohr-Verbindungs-Element**
Pipe connection element
Élément de liaison de tubes

(43) Veröffentlichungstag der Anmeldung: 14.10.2015
(73) Patentinhaber: Hegler, Ralph Peter, 97688 Bad Kissingen (DE)
(72) Erfinder: Hegler, Ralph Peter, 97688 Bad Kissingen (DE)
(74) Vertreter: Rau, Schneck & Hübner Patentanwälte Rechtsanwälte PartGmbB

(56) Entgegenhaltungen:
- US-A- 5 687 976
- US-A1- 2004 222 597
- US-A1- 2010 316 442
- US-A1- 2012 153 578

## Beschreibung

Die Erfindung betrifft ein Rohr-Verbindungs-Element mit mindestens einem in eine Rohr-Muffe einschiebbaren Spitzende.

Bei derartigen Rohr-Verbindungs-Elementen handelt es sich üblicherweise um Abzweigungen, Krümmer, T-förmige Grundkörper für Inspektionsschächte und dergleichen. Die Spitzende-Muffen-Verbindung mit anzuschließenden Leitungen muss je nach Einsatz der Leitungen unterschiedlich sein. Insbesondere bei Dränageleitungen, die zur Aufnahme von Wasser mit Eintritts-Öffnungen versehen sind, muss die Verbindung zwischen dem Rohr-Verbindungs-Element und der jeweiligen Leitung nur in geringerem Maße abgedichtet sein, während sie bei geschlossenen Transport-Leitungen absolut dicht sein muss. Die einzelnen Anforderungen hierzu ergeben sich beispielsweise aus DIN 4262-1.

Während für die Dichtung mit geringen Dichtigkeits-Anforderungen relativ einfache Dichtringe, beispielsweise O-Ringe, eingesetzt werden können, müssen die Dichtungen für hohe Dichtigkeits-Anforderungen sehr viel aufwändiger sein, was sich in deutlich höheren Kosten für die Dichtringe niederschlägt. Für die erwähnten unterschiedlichen Dichtringe müssen entsprechend unterschiedliche Dichtring-Gehäuse mit unterschiedlichen Dichtring-Kammern an den Spitzenden der Rohr-Verbindungs-Elemente ausgebildet werden. Da solche Rohr-Verbindungs-Elemente in der Regel durch Spritzgießen oder Rotationsgießen aus einem geeigneten Kunststoff hergestellt werden, ist insbesondere der Aufwand für die Rotations- bzw. Spritz-Gieß-Werkzeuge sehr hoch.

Aus der US 2004/0222597 A1 ist die direkte Verbindung zweier Doppelwand-Verbundrohre bekannt, die aus einem glatten Innenrohr und einem hiermit verschweißten gewellten Außenrohr bestehen. Die gewellten Außenrohre weisen Wellenberge und zwischen zwei benachbarten Wellenbergen ausgebildete Wellentäler auf, in denen das Außenrohr mit dem Innenrohr verschweißt ist. Die Verbindung zwischen den beiden Verbundrohren erfolgt in der Weise, dass an dem einen Verbundrohr eine Rohrmuffe ausgebildet ist, in die ein Spitzende des anderen Verbundrohres eingeführt wird. Die Wellenberge auf dem Spitzende weisen einen gegenüber den übrigen Wellenbergen reduzierten Durchmesser auf. Zwischen zwei benachbarten Wellenbergen kann eine speziell ausgeführte Dichtung eingesetzt werden. Die Außenumfangsfläche des letzten Wellenberges vor dem Ende des Spitzendes ist ringförmig nach innen gedrückt, sodass dort eine Dichtung eingesetzt werden kann. Der Zweck dieser Ausbildung liegt darin, ein Herausrollen oder -Stoßen der Dichtung beim Einschieben des Spitzendes in die Muffe zu vermeiden.

Aus der US 2010/0316442 A1 ist eine ähnliche Ausgestaltung von Muffe und Spitzende von zwei direkt miteinander zu verbindenden Doppelwand-Verbundrohren bekannt, wobei in den beiden unmittelbar vor dem Ende des Spitzendes angeordneten Wellenbergen ringförmige Vertiefungen zur Aufnahme von Dichtringen ausgebildet sind.

Aus der US 2012/0153578 A1 ist eine mit den beiden zuvor abgehandelten Doppelwand-Verbundrohren vergleichbare Ausgestaltung bekannt, wobei im letzten Wellenberg vor dem Ende des Spitzendes eine ringförmige Vertiefung zur Aufnahme eines Dichtungsrings ausgebildet ist.

Der Erfindung liegt daher die Aufgabe zugrunde, den Aufwand für die Herstellung der Rohr-Verbindungs-Elemente anwendungsspezifisch deutlich zu reduzieren.

Diese Aufgabe wird erfindungsgemäß durch die Merkmale des Anspruches 1 gelöst. Kern der Erfindung ist, das benachbart zum freien Ende des Spitzendes ein erstes Dichtring-Gehäuse zur Aufnahme eines Dichtrings für geringe Dichtungs-Anforderungen und ein zweites Dichtring-Gehäuse zur Aufnahme einer Ringdichtung für höhere Dichtungs-Anforderungen vorgesehen sind, so dass ein und dasselbe Rohr-Verbindungs-Element für unterschiedliche Dichtigkeits-Anforderungen einsetzbar ist. Durch die Reihenfolge der Anordnung der Dichtring-Gehäuse wird erreicht, dass zum einen das Spitzende im Bereich seines freien Endes eine hohe Ringsteifigkeit aufweist und gleichzeitig Führungsfunktionen gegenüber einer Rohr-Muffe vorhanden sind, in die das Spitzende eingeführt wird. Die beiden Dichtring-Gehäuse weisen Dichtring-Kammern mit unterschiedlichen Querschnittflächen auf. Die Dichtring-Gehäuse sind zu einer Einheit zusammengefasst, wobei die beiden Dichtring-Kammern durch einen gemeinsamen Ringsteg voneinander getrennt sind. Insbesondere können die Dichtring-Kammern ringförmige Böden mit unterschiedlichen Radien aufweisen.

Weitere Merkmale, Vorteile und Einzelheiten der Erfindung ergeben sich aus den Unteransprüchen und der nachfolgenden Beschreibung von Ausführungsbeispielen der Erfindung anhand der Zeichnung. In dieser zeigen
- Fig. 1: ein T-förmiges Rohr-Verbindungs-Element, das auch als Schacht-Grundkörper einsetzbar ist, mit angeschlossenen Transport-Leitungen in teilweise aufgebrochener Darstellung,
- Fig. 2: eine Darstellung entsprechend Fig. 1 mit geschlitzten Dränage-Leitungen,
- Fig. 3: eine Stirnansicht eines Spitzendes,
- Fig. 4: einen Teil-Längsschnitt durch das Spitzende nach Fig. 3 entsprechend der Schnittline IV-IV in Fig. 3,
- Fig. 5: eine vergrößerte Teildarstellung des Spitzendes nach Fig. 4,
- Fig. 6: ein als Bogen ausgebildetes Rohr-Verbindungs-Element mit angeschlossenen Transport-Leitungen in teilweise aufgebrochener Darstellung, und
- Fig. 7: eine Darstellung entsprechend Fig. 6 mit geschlitzten Dränage-Leitungen.

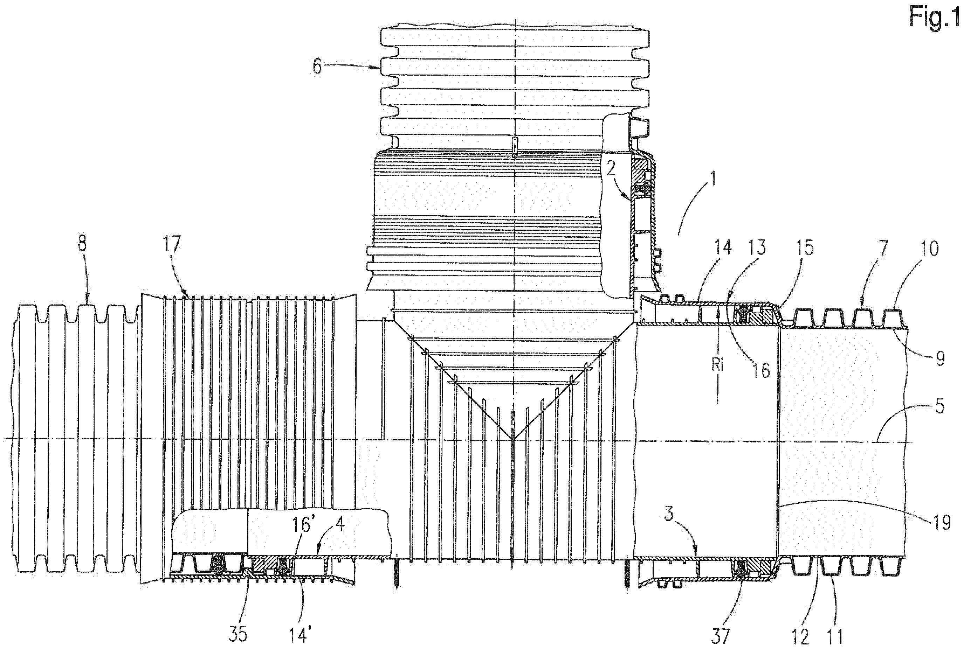

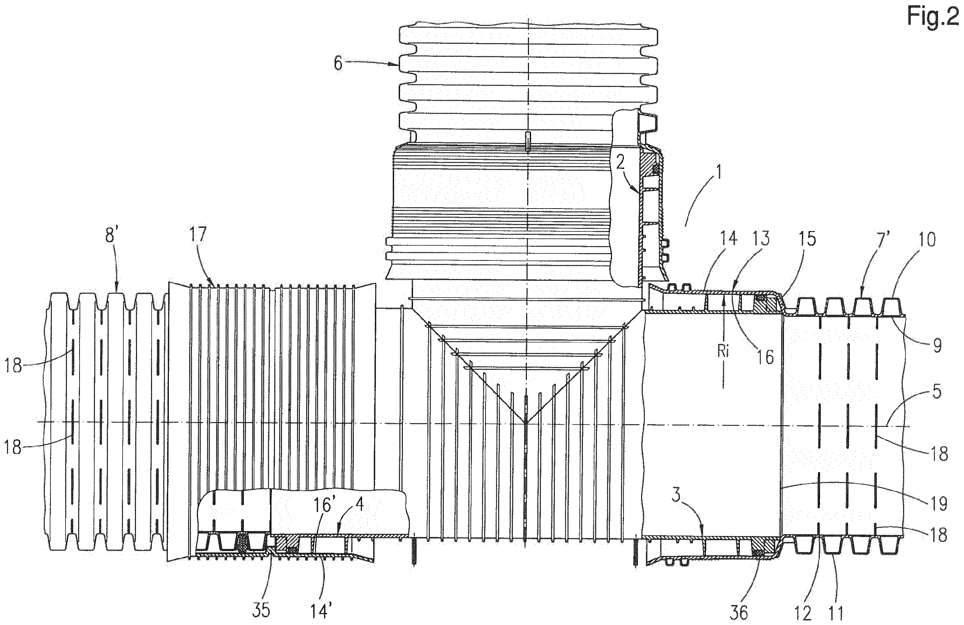

Das in den Fig. 1 und 2 dargestellte Rohr-Verbindungs-Element 1 hat in grober Annäherung die Form eines auf dem Kopf stehenden T. Nach oben erstreckt sich ein erstes Spitzende 2. Am unteren Ende erstrecken sich gleichsam als Quersteg des T ebenfalls als Rohr-Anschlüsse ausgebildete Spitzenden, nämlich ein zweites Spitzende 3 und ein drittes Spitzende 4, die eine durchgehende gemeinsame Achse 5 aufweisen.

Das Rohr-Verbindungs-Element 1 kann als einfaches T-Verbindungs-Element ausgebildet sein, mittels dessen eine mit dem ersten Spitzende 2 verbundene erste Leitung 6 mittels einer weiteren Leitung verbunden wird, die über das zweite Spitzende 3 und das dritte Spitzende 4 verbunden sind. Es kann sich aber auch um einen Inspektions-Schacht-Grundkörper handeln, bei dem mit dem ersten Spitzende 2 ein Schachtelement verbunden wird. In einem solchen Fall hat die erste Leitung 6, die mit dem ersten Spitzende 2 verbunden wird, den Durchmesser eines Inspektions-Schachtes oder auch eines Revisions-Schachtes. Sowohl bei der mit dem ersten Spitzende 2 verbundenen ersten Leitung 6 als auch bei der mit dem zweiten Spitzende 3 verbundenen zweiten Leitung 7 als auch bei der mit dem dritten Spitzende 4 verbundenen dritten Leitung 8 handelt es sich um Doppelwand-Verbundrohre, die aus einem glatten Innenrohr 9 und einem gewellten Außenrohr 10 bestehen. Die gewellten Außenrohre 10 weisen Wellenberge 11 und zwischen zwei benachbarten Wellenbergen 11 ausgebildete Wellentäler 12 auf, in denen das Außenrohr 10 mit dem Innenrohr 9 verschweißt ist. Aufbau und Herstellung derartiger Rohre sind beispielsweise aus der EP 0 563 575 A2 bekannt. Die Leitungen können selbstverständlich auch als Rippenrohre ausgebildet sein. Aus der EP 0 563 575 A2 ist auch bekannt, an dem entsprechenden Rohr inline eine Muffe 13 anzuformen, die einen zylindrischen Abschnitt 14 aufweist, der mittels eines Übergangs-Abschnitts 15 in ein benachbartes Wellental übergeht. Die Muffe 13 weist eine innere zylindrische Dichtfläche 16 auf. Die dritte Leitung 8 ist mit dem dritten Spitzende 4 mittels einer Doppel-Steckmuffe 17 verbunden. Während bei dem Ausführungsbeispiel nach Fig. 1 die zweite und die dritte Leitung 7, 8 als geschlossene, also von außen nach innen oder innen nach außen flüssigkeitsundurchlässige Leitungen ausgebildet sind, sind die in Fig. 2 dargestellten zweiten und dritten Leitungen 7', 8' als Dränageleitungen ausgebildet, bei denen über den Umfang oder auch nur einen Teil des Umfangs in den Wellentälern 12 Wassereintrittsschlitze 18 angebracht sind. Die ersten Leitungen 6 sind in beiden Ausführungsbeispielen als geschlossene, ungeschlitzte Leitungen ausgebildet.

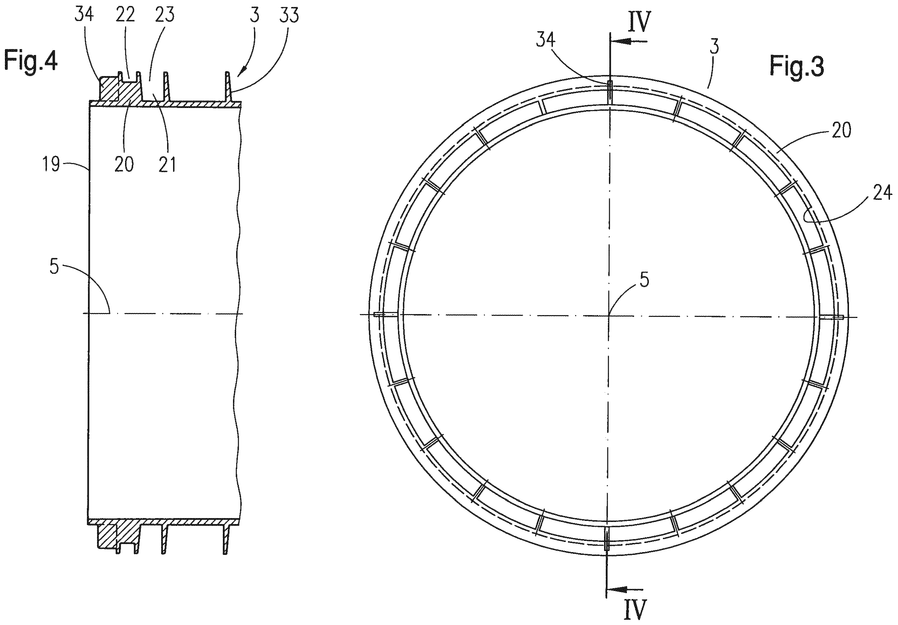

Die Spitzenden 2, 3, 4 sind gleich ausgebildet. Das Spitzende 3 ist exemplarisch in den Fig. 3, 4, 5 dargestellt. Benachbart zum freien Ende 19 des Spitzendes 3 ist ein erstes Dichtring-Gehäuse 20 und ein zweites Dichtring-Gehäuse 21 auf dem Umfang des ansonsten zylindrischen Spitzendes 3 ausgebildet. In dem dem freien Ende 19 benachbarten ersten Dichtring-Gehäuse 20 ist eine Dichtring-Kammer 22 ausbildet, die nach außen offen ist. Unmittelbar angeschlossen an das erste Dichtring-Gehäuse ist im zweiten Dichtring-Gehäuse eine ebenfalls ringförmige, nach außen offene zweite Dichtring-Kammer 23 ausgebildet.

Die erste Dichtring-Kammer 22 wird durch einen ringförmigen ersten Boden 24 und zwei radial nach außen vorstehende Ringstege 25, 26 begrenzt, die zur Dichtring-Kammer 22 hin Dichtflächen 27, 28 bilden.

Die zweite Dichtring-Kammer 23 weist ebenfalls einen ringförmigen zweiten Boden 29 auf und wird zusätzlich durch Dichtflächen 30, 31 begrenzt, die einerseits an dem dem ersten Dichtring-Gehäuse 20 zugehörigen Ringsteg 26 und andererseits an einem gegenüberliegenden Ringsteg 32 ausgebildet sind. Die Querschnittsfläche der ersten Dichtring-Kammer 22 ist deutlich kleiner als die Querschnittsfläche der zweiten Dichtring-Kammer 23. Dies wird primär dadurch bewirkt, dass der Radius R₂₄ des ersten Bodens 24 größer ist als der Radius R₂₉ des ringförmigen zweiten Bodens 29. Die unterschiedlichen Querschnitte der Dichtring-Kammern 22 und 23 können aber auch durch deutlich unterschiedliche axiale Erstreckungen der Dichtring-Kammern 22, 23 bewirkt werden.

Die Ringstege 25, 26 und 32 haben gleichermaßen wie ein noch weiter vom freien Ende 19 beabstandeter ringförmiger Zentriersteg 33 einen Außenradius Ra, der gleich oder unwesentlich kleiner als der Innenradius Ri der zylindrischen Dichtfläche 16 des zylindrischen Abschnitts 14 der Muffe 13 ist, so dass ein in die Muffe 13 bzw. in die Doppel-Steckmuffe 17 gestecktes Spitzende 2, 3, 4 zentriert in diese eingeführt und in dieser gehalten wird.

An der dem freien Ende 19 zugewandten Seite des ersten Dichtring-Gehäuses 20 sind - wie insbesondere aus Fig. 3 hervorgeht - über den Umfang verteilt Stützstege 34 ausgebildet, die gegen den Übergangs-Abschnitt 15 der Muffe 13 oder einen in der Mitte der Doppel-Steckmuffe 17 ausgebildeten, nach innen vorspringenden Anschlag-Ringsteg 35 anliegen. Hierdurch wird sichergestellt, dass die Dichtring-Gehäuse 20 bzw. 21 sich im zylindrischen Abschnitt 14 der Muffe 13 bzw. im zylindrischen Abschnitt 14' der Doppel-Steckmuffe 17 befinden.

Das erste Dichtring-Gehäuse 20 dient zur Aufnahme eines ersten Dichtrings 36 in der ersten Dichtring-Kammer 22. Das zweite Dichtring-Gehäuse 21 dient zur Aufnahme eines zweiten Dichtrings 37 in der zweiten Dichtring-Kammer 23, wobei selbstverständlich nur jeweils alternativ ein erster Dichtring 36 oder ein zweiter Dichtring 37 eingesetzt wird.

Bei dem ersten Dichtring 36 handelt es sich in der Regel um einen sogenannten O-Ring, der also etwa Kreis-Querschnitte aufweist. Er wird bei der Konstellation nach Fig. 2 eingesetzt, wenn also beispielsweise bei teilweise oder ganz geschlitzten Rohren nur geringe Anforderungen an die Dichtheit der Muffenverbindung gestellt werden. Je nach Toleranz zwischen dem Innenradius Ri und dem Außenradius Ra erfolgen unterschiedliche Verformungen des ersten Dichtrings 36. Je größer die Differenz zwischen Ri und Ra ist, umso geringer ist die Dichtwirkung. Die Querschnittsfläche der ersten Dichtring-Kammer 22 ist größer als die Querschnittsfläche des ersten Dichtrings 36. Der erste Dichtring 36 ragt in montiertem Zustand radial über die Ringstege 25 und 26 hinaus, hat also einen größeren Außendurchmesser als Ra. Der Dichtring 36 wird beim Einschieben in die Muffe 13 komprimiert und elliptisch verformt; er liegt im Endzustand allerdings nicht an den Dichtflächen 27, 28 an. Die erste Dichtring-Kammer 22 bildet zusammen mit dem ersten Dichtring 36 also eine Dichtungskombination für geringe Dichtungs-Anforderungen.

Demgegenüber hat die zweite Dichtring-Kammer 23 eine deutliche größere Querschnittsfläche als der zweite Dichtring 37, der mehrere Dichtstege 38, 39, 40, 41 aufweist, die an dem ringförmigen zweiten Boden 29 und den Dichtflächen 30 bzw. 31 anliegen, wobei zwischen den Dichtstegen 38 bis 41 Einschnürungen 42, 43, 44 ausgebildet sind, in die hinein der zweite Dichtring 37 verformt werden kann. Außerdem weist er Dichtstege 45, 46, 47 auf, die gegen die zylindrische innere Dichtfläche 16 der Muffe 13 bzw. die zylindrische Dichtfläche 16' der Doppel-Steckmuffe 17 anliegen. Ein derartiger Dichtring 37 ist beispielsweise aus der EP 2 230 359 A2 bekannt, wobei dies grundsätzlich nicht beschränkend ist. Der Dichtring 37 liegt auch bei einer großen Differenz zwischen Ri und Ra an den Dichtflächen 30, 31 und dem Boden 29 dichtend an und kann in einem großen Bereich komprimiert werden. Es findet also eine Dichtung statt, die höheren Dichtungsanforderungen entspricht. Ein solcher Dichtring 37 wird also eingesetzt, wenn entsprechend der Darstellung in Fig. 1 geschlossene RohrLeitungen mittels des Rohr-Verbindungselements 1 verbunden werden sollen, wobei die Leitungen 7, 8 nur zum Transport von Flüssigkeit dienen und daher die Verbindung mit dem Rohr-Verbindungs-Element dicht sein muss.

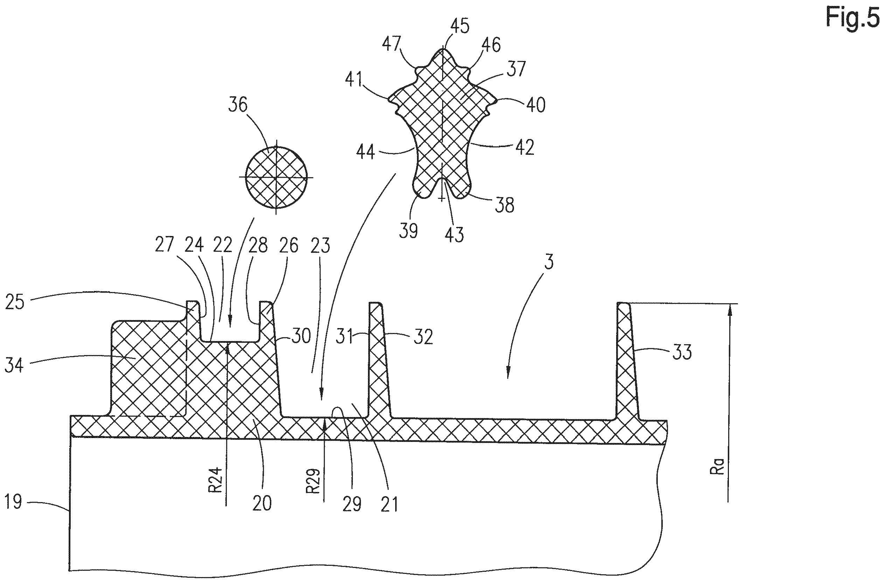

Wie sich anschaulich aus Fig. 5 ergibt, ist der freie Querschnitt zwischen dem zweiten Dichtring 37 und den Begrenzungsflächen der zweiten Dichtring-Kammer 23 verhältnismäßig groß, so dass eine starke Kompression des zweiten Dichtrings 37 möglich ist, wobei jeweils eine Abdichtung an mehreren Stellen erfolgt. Demgegenüber ist der Bereich beim ersten Dichtring 36 der entsprechende freie Bereich verhältnismäßig klein.

Die entsprechenden Anforderungen ergeben sich aus DIN 4262-1.

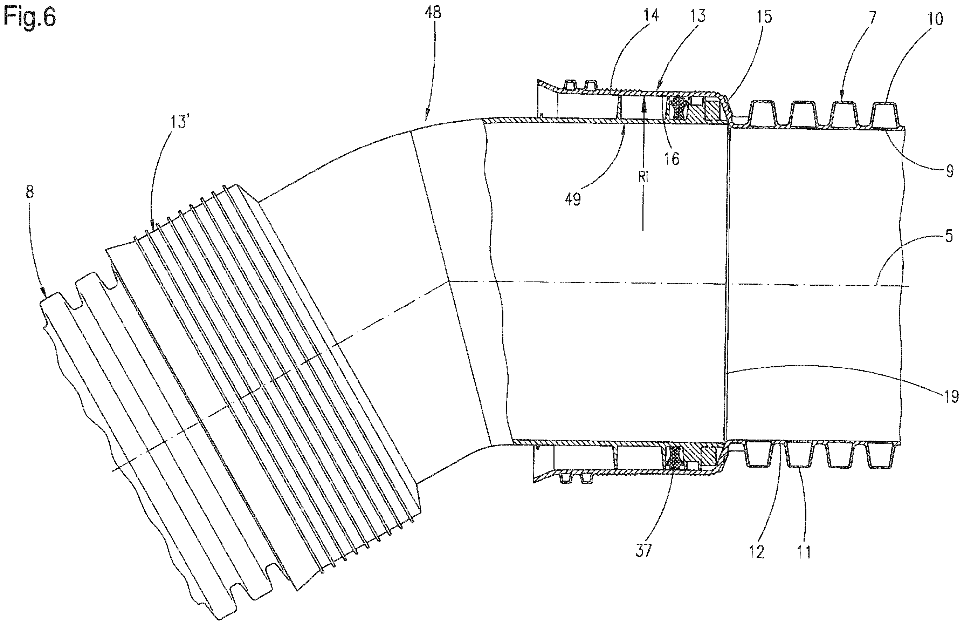

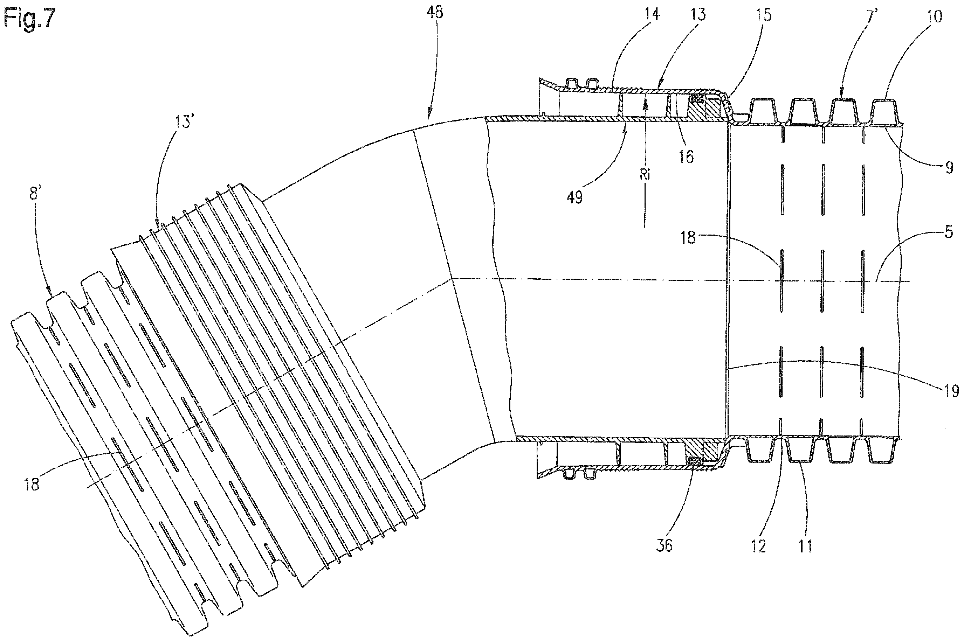

In den Fig. 6 und 7 ist ein als Rohr-Bogen ausgebildetes Rohr-Verbindungs-Element 48 dargestellt, das ein Spitzende 49 aufweist, das wie die Spitzenden 2, 3, 4 ausgebildet ist. An seinem anderen Ende weist das Rohr-Verbindungs-Element 48 eine Muffe 13' auf, die in ihrem Innenaufbau einer halben Doppel-Steckmuffe 17 entspricht.

Dargestellt sind wiederum Verbindungen mit ungeschlitzten Leitungen 7, 8 (Fig. 6) und geschlitzten Leitungen 7', 8' (Fig. 7). Im Übrigen kann insoweit auf die obige Beschreibung verwiesen werden.

## Patentansprüche

1. Rohr-Verbindungs-Element (1, 48),
- mit mindestens einem in eine Rohr-Muffe (13, 13', 17) einschiebbaren Spitzende (2, 3, 4, 49),
-- das ein freies Ende (19) aufweist,
- mit einem auf dem Außenumfang des Spitzendes (2, 3, 4, 49) ausgebildeten ersten Dichtring-Gehäuse (20),
-- das benachbart zum freien Ende (19) angeordnet ist und
-- das eine nach außen offene ringförmige erste Dichtring-Kammer (22) zur Aufnahme eines ersten Dichtrings (36) für geringere Dichtungsanforderungen aufweist,
- mit einem auf dem Außenumfang des Spitzendes (2, 3, 4, 49) ausgebildeten zweiten Dichtring-Gehäuse (21),
-- das auf der dem freien Ende (19) abgewandten Seite des ersten Dichtring-Gehäuses (20) angeordnet ist und
-- das eine nach außen offene ringförmige zweite Dichtring-Kammer (23) zur Aufnahme eines zweiten Dichtrings (37) für höhere Dichtungsanforderungen aufweist und
-- wobei die Querschnittsfläche der ersten Dichtring-Kammer (22) kleiner ist als die Querschnittfläche der zweiten Dichtring-Kammer (23),
- wobei das erste Dichtring-Gehäuse (20) und das zweite Dichtring-Gehäuse (21) eine Einheit bilden **dadurch gekennzeichnet, dass** die erste Dichtring-Kammer (22) und die zweite Dichtring-Kammer (23) durch einen gemeinsamen Ringsteg (26) voneinander getrennt sind.

2. Rohr-Verbindungs-Element (1, 48) nach Anspruch 1, **dadurch gekennzeichnet,**
**dass** die erste Dichtring-Kammer (22), durch einen ringförmigen ersten Boden (24) mit einem Radius R₂₄ und die zweite Dichtring-Kammer (23) durch einen ringförmigen zweiten Boden (29) mit einem Radius R₂₉ begrenzt sind und dass gilt: R₂₄ > R₂₉.

3. Rohr-Verbindungs-Element (1, 48) nach einem der Ansprüche 1 oder 2, **dadurch gekennzeichnet,**
**dass** die Dichtring-Kammern (22, 23) durch jeweils radial nach außen ragende Ringstege (25, 26, 32) begrenzt sind, die jeweils einen gleichen Radius Ra aufweisen.

4. Rohr-Verbindungs-Element (1, 48) nach einem der Ansprüche 1 bis 3, **dadurch gekennzeichnet,**
**dass** an dem dem freien Ende (19) benachbarten Ringsteg (25) axial vorspringende Stützstege (34) ausgebildet sind.

## Claims

1. Pipe connection element (1, 48) comprising
- at least one spigot (2, 3, 4, 49) insertable into a pipe socket (13, 13', 17),
-- the spigot (2, 3, 4, 49) having a free end (19),
- a first sealing ring housing (20) formed on the outer circumference of the spigot (2, 3, 4, 49), the first sealing ring housing (20)
-- being arranged adjacent to the free end (19) and
-- having an outwardly open annular first sealing ring chamber (22) for receiving a first sealing ring (36) for lower sealing requirements,
- a second sealing ring housing (21) formed on the outer circumference of the spigot (2, 3, 4, 49), the second sealing ring housing (21)
-- being arranged on the side of the first sealing ring housing (20) remote from the free end (19), and
-- comprising an outwardly open annular second sealing ring chamber (23) for receiving a second sealing ring (37) for higher sealing requirements, and
-- wherein the cross-sectional area of the first sealing ring chamber (22) is smaller than the cross-sectional area of the second sealing ring chamber (23),
- wherein the first sealing ring housing (20) and the second sealing ring housing (21) form one unit, **characterized in**
**that** the first sealing ring chamber (22) and the second sealing ring chamber (23) are separated from each other by a common annular web (26).

2. Pipe connection element (1, 48) according to claim 1, **characterised in that** the first sealing ring chamber (22) is delimited by an annular first bottom (24) having a radius R₂₄ and the second sealing ring chamber (23) is delimited by an annular second bottom (29) having a radius R₂₉, and that the following applies: R₂₄ > R₂₉.

3. Pipe connection element (1, 48) according to one of claims 1 or 2, **characterised in**
**that** the sealing ring chambers (22, 23) are in each case delimited by radially outwardly protruding annular webs (25, 26, 32) each of which has a same radius Ra.

4. Pipe connection element (1, 48) according to one of claims 1 to 3, **characterised in**
**that** on the annular web (25) adjacent to the free end (19), axially protruding support webs (34) are formed.

## Revendications

1. Elément de liaison de tubes (1, 48),
- avec au moins une extrémité pointue (2, 3, 4, 49) pouvant être introduite dans un manchon tubulaire (13, 13', 17),
-- qui comprend une extrémité libre (19),
- avec un premier boîtier de bague d'étanchéité (20) formé sur la périphérie extérieure de l'extrémité pointue (2, 3, 4, 49),
-- qui est agencé de manière adjacente à l'extrémité libre (19) et
-- qui comprend une première chambre de bague d'étanchéité (22) annulaire ouverte vers l'extérieur destinée à loger une première bague d'étanchéité (36) pour de plus faibles exigences d'étanchéité,
- avec un deuxième boîtier de bague d'étanchéité (21) formé sur la périphérie extérieure de l'extrémité pointue (2, 3, 4, 49),
-- qui est agencé sur la face du premier boîtier de bague d'étanchéité (20) opposée à l'extrémité libre (19) et
-- qui comprend une deuxième chambre de bague d'étanchéité (23) annulaire ouverte vers l'extérieur destinée à loger une deuxième bague d'étanchéité (37) pour des exigences d'étanchéité plus élevées et
-- la superficie de section de la première chambre de bague d'étanchéité (22) étant inférieure à la superficie de section de la deuxième chambre de bague d'étanchéité (23),
- dans lequel le premier boîtier de bague d'étanchéité (20) et le deuxième boîtier de bague d'étanchéité (21) forment une unité, **caractérisé en ce que**
la première chambre de bague d'étanchéité (22) et la deuxième chambre de bague d'étanchéité (23) sont séparées l'une de l'autre par une nervure annulaire (26) commune.

2. Elément de liaison de tubes (1, 48) selon la revendication 1, **caractérisé**
**en ce que** la première chambre de bague d'étanchéité (22) est délimitée par un premier fond annulaire (24) selon un rayon R₂₄ et la deuxième chambre de bague d'étanchéité (23) est délimitée par un deuxième fond annulaire (29) selon un rayon R₂₉ et en ce que : R₂₄ > R₂₉ s'applique.

3. Elément de liaison de tubes (1, 48) selon l'une quelconque des revendications 1 ou 2, **caractérisé**
**en ce que** les chambres de bague d'étanchéité (22, 23) sont délimitées par des nervures annulaires (25, 26, 32) qui font chacune saillie radialement vers l'extérieur et qui présentent chacune un rayon Ra identique.

4. Elément de liaison de tubes (1, 48) selon l'une quelconque des revendications 1 à 3, **caractérisé**
**en ce que** des nervures d'appui (34) faisant saillie axialement sont formées sur la nervure annulaire (25) adjacente de l'extrémité libre (19).
